# FASCICULE DE BREVET EUROPEEN

(11) **EP 2 786 022 B1**
(45) Date de publication et mention de la délivrance du brevet: **22.08.2018**
(21) Numéro de dépôt: 12788498.9
(22) Date de dépôt: 14.11.2012
(51) Int. Cl.: F04D 25/08, F04D 29/66, H02K 5/20, H02K 5/24

(54) **SUPPORT DE MOTEUR DE VENTILATEUR AMORTISSANT AVEC REFROIDISSEMENT DU MOTEUR**
DÄMPFENDE LÜFTERMOTORHALTERUNG MIT KÜHLUNG DES MOTORS
DAMPING FAN MOTOR SUPPORT WITH COOLING OF THE MOTOR

(30) Priorité: 30.11.2011 FR 1103644
(43) Date de publication de la demande: 08.10.2014
(73) Titulaire: Valeo Systemes Thermiques, 78320 Le Mesnil Saint Denis (FR)
(72) Inventeur: LE GOFF, Morgan, 91360 Epinay Sur Orge (FR)
(74) Mandataire: Metz, Gaëlle
(86) Numéro de dépôt international: PCT/EP2012/072590
(87) Numéro de publication internationale: WO 2013/079322

(56) Documents cités:
- DE-B- 1 025 557
- FR-A1- 2 804 554
- GB-A- 1 031 646

## Description

La présente invention concerne le domaine technique des systèmes de ventilation à moteur électrique, appelés également groupes moto-ventilateur, produisant un flux d'air pulsé, et susceptibles, notamment, d'être utilisés dans un véhicule automobile pour assurer le refroidissement d'éléments fonctionnels et/ou la climatisation d'un habitacle du véhicule.

De manière générale, un groupe moto-ventilateur comprend un carter-volute fermé en partie au moins par un carter-support pour former un caisson de ventilation comprenant au moins une entrée d'air et au moins une sortie d'air. Le groupe moto-ventilateur comprend également une turbine disposée dans le caisson de ventilation, pour aspirer un flux d'air par l'entrée d'air et le refouler par la sortie d'air, et entraînée par un moteur d'entraînement, en particulier un moteur électrique, disposé dans un logement-moteur du carter-support.

Un tel groupe moto-ventilateur est généralement placé dans un boîtier de chauffage, ventilation et/ou climatisation disposé sous une planche de bord dans une partie située à l'intérieur de l'habitacle du véhicule et séparée du compartiment moteur, à l'intérieur duquel se trouve l'unité de propulsion du véhicule. La position du boîtier de chauffage, ventilation et/ou climatisation à l'intérieur de l'habitacle impose de réduire les bruits de fonctionnement et, notamment, les bruits résultant des vibrations engendrées par la rotation du moteur d'entraînement du groupe moto-ventilateur.

A cet effet, il est connu de mettre en oeuvre un support-moteur intégrant un logement-moteur et agencé dans le carter-support. Le support-moteur comprend une embase pourvue de moyens de fixation sur un élément du groupe moto-ventilateur Le support-moteur comprend aussi un réceptacle situé en partie au moins à l'intérieur de l'embase et comprenant une paroi périphérique formant le logement-moteur permettant la réception du moteur d'entraînement. Le support-moteur comprend enfin des moyens de découplage interposés entre l'embase et le réceptacle et assurant la liaison entre le réceptacle et l'embase. Les moyens de découplage limitent, voire interdisent, la transmission des vibrations du moteur d'entraînement, tout en assurant un maintien fiable et durable du réceptacle.

Afin de permettre un refroidissement du moteur d'entraînement, il prévu de prélever un flux d'air de refroidissement dans le caisson de ventilation, en particulier en aval de la turbine selon l'écoulement du flux d'air dans le caisson de ventilation, pour acheminer le flux d'air de refroidissement vers le support-moteur. Ainsi, l'embase du support-moteur comprend au moins une ouverture de refroidissement pour la circulation du flux d'air de refroidissement et le réceptacle comprend au moins une fenêtre de refroidissement pour la circulation du flux d'air de refroidissement vers le logement-moteur. La combinaison de la fenêtre de refroidissement et de l'ouverture de refroidissement permet à une partie au moins du flux d'air de refroidissement prélevé dans le caisson de ventilation d'atteindre le moteur d'entraînement.

Le document GB 1 031 646 A divulgue un support de moteur de ventilateur selon le préambule de la revendication 1. Ce support allie les fonctions d'amortissement vibratoire et de refroidissement du moteur.

Il est apparu à l'usage un besoin d'optimiser le refroidissement du moteur d'entraînement, d'augmenter les performances aérauliques du groupe moto-ventilateur et de limiter la transmission des vibrations du moteur d'entraînement. Afin d'atteindre cet objectif, l'invention propose un support-moteur pour un moteur d'entraînement d'une turbine d'un groupe moto-ventilateur selon la revendication 1. Selon l'invention, le support-moteur comprend au moins un manchon de refroidissement reliant l'ouverture de refroidissement et la fenêtre de refroidissement. Le manchon de refroidissement est réalisé dans un matériau souple adapté pour faire obstacle à la transmission des vibrations du moteur d'entraînement du réceptacle à l'embase.

La mise en oeuvre du manchon de refroidissement reliant l'ouverture de refroidissement à la fenêtre de refroidissement permet une bonne canalisation du flux d'air de refroidissement vers le logement de réception du moteur pour assurer un refroidissement efficace. Le manchon de refroidissement évite, en effet, que le flux d'air de refroidissement ne se diffuse dans l'espace séparant l'embase et le réceptacle et ne s'échappe vers le caisson de ventilation ou vers l'extérieur sans être passé dans le logement de réception du moteur.

De plus, la mise en oeuvre du manchon de refroidissement permet de réduire le flux d'air de refroidissement prélevé dans le caisson de ventilation dans la mesure où le manchon de refroidissement garantit que la majeure partie du flux d'air de refroidissement est canalisée en direction du logement de réception et du moteur qu'il renferme. Par ailleurs, le manchon de refroidissement est adapté pour faire obstacle à la transmission des vibrations du réceptacle vers l'embase de manière à ne pas affecter le découplage mécanique vibratoire entre l'embase et le réceptacle assuré par les moyens de découplage.

Selon une variante de réalisation de l'invention, chaque fenêtre de refroidissement est située sensiblement en regard d'une ouverture de refroidissement. Ce positionnement de la fenêtre de refroidissement par rapport à l'ouverture de refroidissement permet de mettre en oeuvre un manchon de refroidissement de forme sensiblement rectiligne ou droite, limitant les pertes de charge et n'affectant pas l'efficacité du flux d'air de refroidissement.

Selon une autre variante de l'invention, le manchon de refroidissement possède une section de passage de forme sensiblement constante entre la fenêtre de refroidissement et l'ouverture de refroidissement correspondante. Le caractère constant de la section de passage permet également de limiter les pertes de charge et contribue à de bonnes performances aérauliques de la canalisation du flux d'air de refroidissement vers le logement de réception du moteur.

Selon l'invention le manchon de refroidissement peut être réalisé de toute manière et en tout matériau approprié, dans la mesure où il fait obstacle à la transmission des vibrations du réceptacle vers l'embase, tout en présentant une résistance mécanique aux vibrations et aux conditions de températures, qu'il doit subir. Le mode de réalisation du manchon doit, de préférence, lui permettre de conserver son intégrité structurelle et fonctionnelle après de longues périodes de fonctionnement en continu interrompues par de longues périodes d'arrêt d'un groupe moto-ventilateur intégrant le support-moteur selon l'invention.

Ainsi, le manchon de refroidissement peut être réalisé en matériau élastomère, naturel ou synthétique. Le manchon de refroidissement peut également être réalisé en un matériau polymère choisi parmi les matériaux suivant :
- élastomères,
- SEBS (styrène-éthylène-butylène-styrène),
- EPDM (éthylène-propylène-diène),
- Silicone,
- PUR (polyuréthane) souple, ...

Selon l'invention, le support-moteur comporte des moyens de découplage agencés entre l'embase et le réceptacle pour assurer une liaison entre le réceptacle et l'embase.

Selon une variante, le manchon de refroidissement et les moyens de découplages sont réalisés, préférentiellement, dans le même matériau.

Selon une autre variante de l'invention, le manchon de refroidissement est lié directement au moins à une partie des moyens de découplage.

Dans le cadre de ces deux dernières variantes, prises séparément ou en combinaison, les moyens de découplage et le manchon de refroidissement peuvent appartenir à une même pièce moulée, notamment en élastomère. Un tel mode de réalisation permet de réduire le coût de fabrication des moyens de découplage et du manchon de refroidissement et facilite le montage de l'ensemble ainsi constitué de manière à limiter le coût d'assemblage du support-moteur selon l'invention.

Selon l'invention, le manchon de refroidissement forme un élément de découplage entre le réceptacle et l'embase. Cette intégration du manchon de refroidissement aux moyens de découplage permet de réduire les coûts de fabrication du support-moteur selon l'invention.

Selon une variante de l'invention, l'embase comprend un épaulement périphérique d'appui sur le caisson de ventilation. La mise en oeuvre d'un tel épaulement périphérique d'appui permet d'optimiser l'étanchéité entre le support-moteur et l'élément du groupe moto-ventilateur sur lequel le support-moteur est fixé.

L'invention concerne également un groupe moto ventilateur comprenant :
- un caisson de ventilation comportant au moins une entrée d'air et au moins une sortie d'air,
- une turbine disposée dans le caisson de ventilation, pour aspirer un flux d'air par l'entrée d'air et le refouler par la sortie d'air,
- un moteur d'entraînement de la turbine, avantageusement électrique, disposé dans le logement de réception du moteur d'entraînement, et
- un support-moteur conforme à l'invention, dont, en particulier, l'embase est fixée sur le caisson de ventilation.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation, sur lesquelles :
- La figure 1 est une coupe transversale schématique d'un groupe moto-ventilateur selon la présente invention,
- La figure 2 est une perspective schématique d'un support-moteur du groupe moto-ventilateur selon la présente invention,
- La figure 3 est une perspective schématique partiellement éclatée du support-moteur de la figure 2, et
- La figure 4 est une vue en perspective d'une variante de réalisation d'un manchon de refroidissement formant un élément de découplage du support-moteur de la présente l'invention.

Il est à noter que, sur les figures, les éléments structurels et/ou fonctionnels communs aux différents modes de réalisation peuvent présenter les mêmes références. Ainsi, sauf mention contraire, ces éléments disposent de propriétés structurelles, dimensionnelles et matérielles identiques.

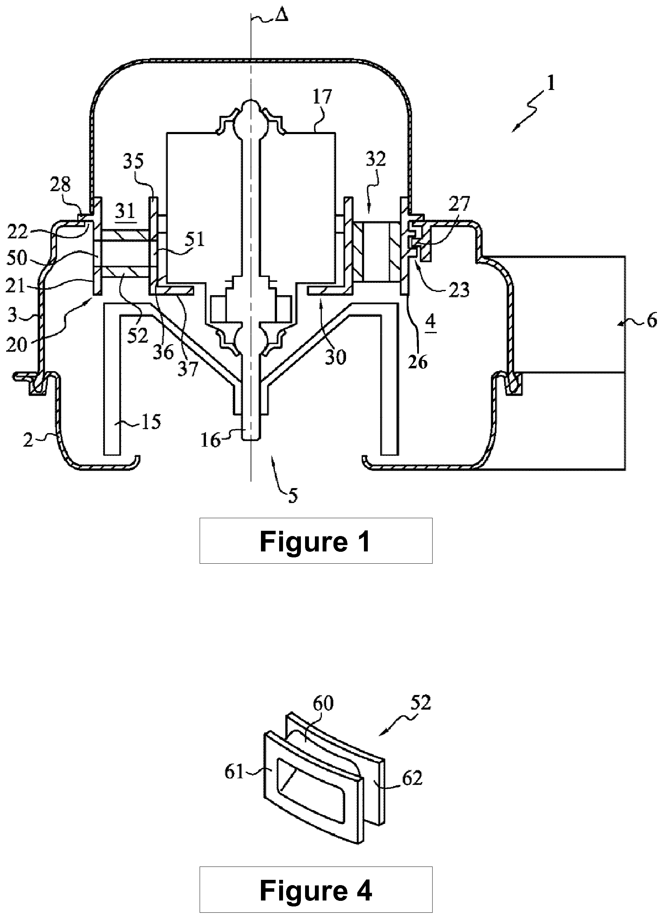

La figure 1 est une coupe transversale schématique d'un groupe moto-ventilateur 1 selon la présente invention. Le groupe moto-ventilateur 1 comprend un carter-volute 2 fermé, en partie au moins, par un carter-support 3 pour former un caisson de ventilation 4 qui comprend au moins une entrée d'air 5 et au moins une sortie d'air 6.

La mise en mouvement d'un flux d'air, à l'intérieur du caisson de ventilation 4, est assurée par une turbine 15 disposée à l'intérieur du caisson de ventilation 4. La turbine 15 est solidaire d'un arbre d'entraînement 16, s'étendant selon un axe longitudinal formant un axe de rotation, d'un moteur d'entraînement 17, préférentiellement un moteur électrique 17. Le moteur d'entraînement 17 permet d'entraîner en rotation la turbine 15. Le moteur d'entraînement 17 est maintenu par un support-moteur 20 fixé sur le carter-support 3. Avantageusement, le support-moteur 20 est assemblé directement dans le carter-support 3.

Plus particulièrement, la coupe transversale schématique de la figure 1 est réalisée selon un plan contenant l'arbre d'entraînement 16 du moteur d'entraînement 17.

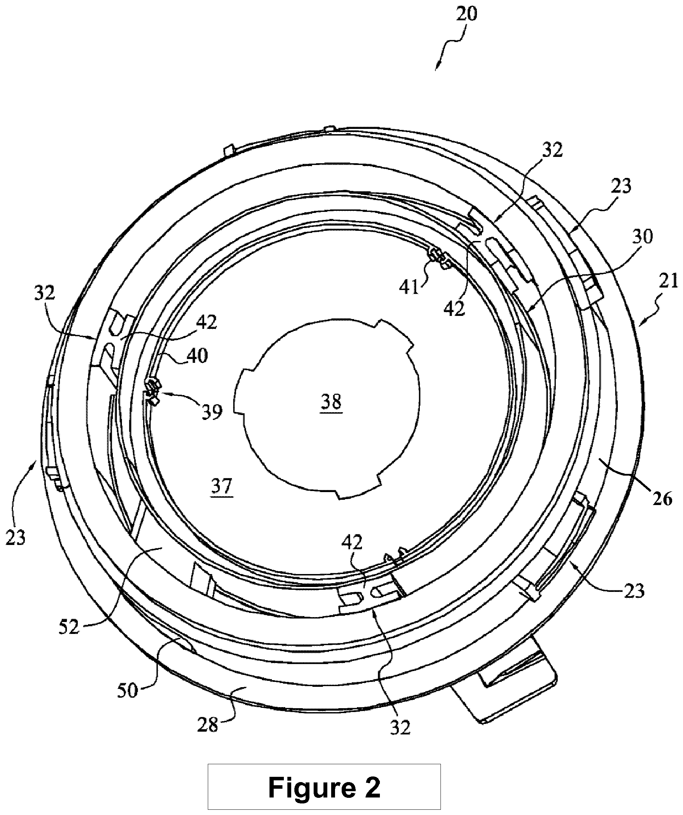

La figure 2 est une perspective schématique du support-moteur 20 du groupe moto-ventilateur 1 selon la présente invention. Comme le montre plus particulièrement la figure 2, le support-moteur 20 comprend une embase 21. Selon l'exemple illustré, l'embase 21 présente une forme générale sensiblement annulaire, présentant préférentiellement un axe de symétrie Δ. Avantageusement, l'axe de symétrie Δ de l'embase 21 est sensiblement confondu avec l'axe longitudinal de l'arbre d'entraînement 16. L'embase 21 est placée dans un logement-moteur 22 du carter-support 3.

Le logement-moteur 22 est, par exemple, formé par une ouverture 22, avantageusement sensiblement circulaire, de forme complémentaire à l'embase 21. Le logement-moteur 22 débouche dans le caisson de ventilation 4.

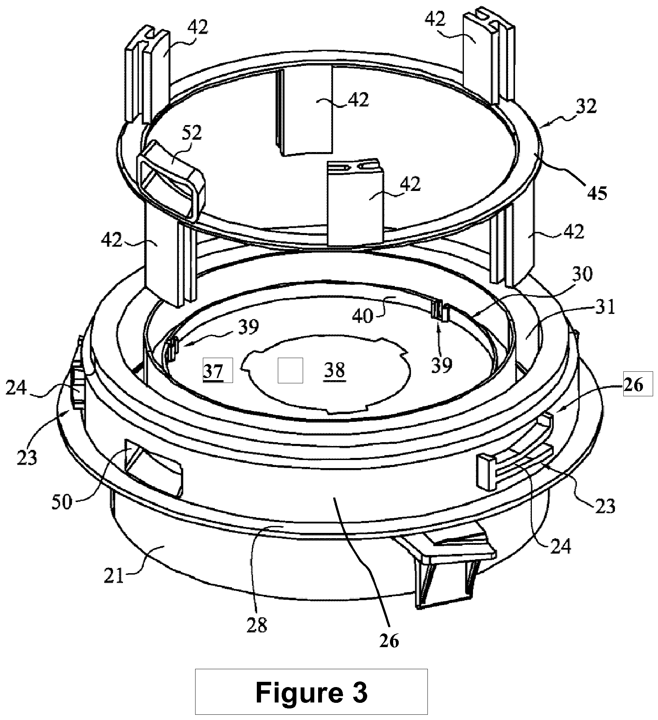

Afin de permettre une fixation du support-moteur 20 sur le carter-support 3, l'embase 21 comprend des moyens de fixation 23, qui peuvent être réalisés de toute façon appropriée. Selon l'exemple illustré, les moyens de fixation 23 sont du type à baïonnette et comprennent une série de gorges 24, préférentiellement en forme de 'U' et au nombre de trois, visibles sur la figure 3, s'étendant en saillie d'une paroi périphérique extérieure 26 de l'embase 21. Les gorges 24 sont destinées à coopérer chacune avec des ergots de verrouillage 27 agencés sur le carter-support 3, en particulier au niveau du logement-moteur 22.

Selon l'exemple illustré, l'embase 21 comprend également un épaulement périphérique 28 venant en appui contre une face extérieure du caisson de ventilation 4, préférentiellement formée par le carter-support 3. L'épaulement périphérique 28 contribue à assurer l'étanchéité du caisson de ventilation 4 au niveau du logement-moteur 22 du carter- support 3.

Le support-moteur 20 comprend également un réceptacle 30 recevant le moteur d'entraînement 17. Le moteur d'entraînement 17 est disposé dans le réceptacle 30 de façon à y être immobilisé et maintenu. Le réceptacle 30 est disposé à l'intérieur d'un logement central 31 de l'embase 21 et se trouve fixé à l'embase 21 par des moyens de découplage 32, en partie visibles sur les figures 1 et 2. Les moyens de découplage 32 sont interposés entre l'embase 21 et le réceptacle 30 en étant situés dans le logement central 31.

Le réceptacle 30 comprend une paroi périphérique 35 définissant un logement de réception 36 du moteur de d'entraînement 17. Le logement de réception 36 est en partie fermé par au moins un organe de maintien 37 destiné à offrir un appui au moteur d'entraînement 17 comme le montre la figure 1. Le logement de réception 36 comporte avantageusement deux organes de maintien 37 disposés de part et d'autre du moteur d'entraînement 17.

Selon l'exemple de réalisation présenté à la figure 1, l'organe de maintien 37 est disposé du coté de l'arbre d'entraînement 16 du moteur d'entraînement 17 et possède une ouverture centrale 38 destinée à permettre un passage de l'arbre d'entraînement 16 du moteur d'entraînement 17.

Le réceptacle 30 comprend, optionnellement, des moyens de fixation 39, visibles sur la figure 2, permettant d'immobiliser le moteur d'entraînement 17 dans le logement de réception 36. Les moyens de fixation 39 peuvent être réalisés de toute manière appropriée. Selon l'exemple illustré, les moyens de fixation 39 sont formés par des nervures 40 comprenant des encoches 41 destinée à recevoir des éléments de fixation complémentaires, non visibles sur les figures, agencés sur le moteur d'entraînement 17.

Les moyens de découplage 32 permettent de réaliser une liaison, dite 'souple', entre le réceptacle 30 et l'embase 21, de manière à limiter, voire empêcher, la transmission des vibrations générées par le moteur d'entraînement 17, en fonctionnement, à l'embase 21.

Les moyens de découplage 32 peuvent être réalisés de toute façon appropriée. Selon l'exemple illustré, les moyens de découplage 32 comprennent six plots 42 réalisés en matière plastique souple, de préférence en élastomère naturels ou synthétiques. Préférentiellement, les six plots 42 sont agencés sur deux plans distincts en étant décalés angulairement les uns par rapport aux autres.

Afin de faciliter le montage, les moyens de découplage 32 sont, de préférence, réalisés pour appartenir à une unique pièce, notamment une unique pièce moulée, plus particulièrement visible à la figure 3, qui est une perspective schématique partiellement éclatée du support-moteur 3 de la figure 2.

Selon la configuration représentée, les moyens de découplage 32 sont solidaires d'un anneau 45 portant, sur une face supérieure, trois plots de découplage 42 placés à 120° les uns des autres et, sur une face inférieure, trois plots de découplage 42 placés à 120° les uns des autres. De plus, avantageusement, les trois plots de découplage 42 agencés sur la face inférieure de l'anneau 45 sont également respectivement décalés de 60° par rapport aux plots de découplage 42 agencés sur la face supérieure de l'anneau 45.

Afin de permettre un refroidissement du moteur d'entraînement 17, l'embase 21 comprend une ouverture de refroidissement 50. Selon l'exemple illustré, l'ouverture de refroidissement 50 débouche dans le caisson de ventilation 4 afin d'y prélever un flux d'air de refroidissement. Avantageusement, le flux d'air de refroidissement est en surpression, lorsque la turbine 15 est animée d'un mouvement de rotation. Bien entendu, une autre disposition de l'ouverture de refroidissement 50 pourrait être envisagée, notamment en fonction de la forme du carter-support 3.

Toujours dans le but d'assurer le refroidissement du moteur d'entraînement 17, le réceptacle 30 et, plus particulièrement, la paroi périphérique 35 du réceptacle 30, comprend une fenêtre de refroidissement 51 permettant le passage du flux d'air de refroidissement dans le logement de réception 36. Selon l'exemple illustré, la fenêtre de refroidissement 51 du réceptacle 30 est située sensiblement en regard de l'ouverture de refroidissement 50 de l'embase 21.

Afin de permettre un passage direct du flux d'air de refroidissement de l'ouverture de refroidissement 50 à la fenêtre de refroidissement 51, le support-moteur 20 comprend un manchon de refroidissement 52 reliant l'ouverture de refroidissement 50 à la fenêtre de refroidissement 51. La mise en oeuvre du manchon de refroidissement 52 évite ainsi que le flux d'air de refroidissement ne se diffuse dans l'espace séparant l'embase 21 et le réceptacle 30, sans atteindre le logement de réception 35.

Le manchon de refroidissement 51 est réalisé dans un matériau souple adapté pour faire obstacle à la transmission des vibrations du réceptacle 30 à l'embase 21, lorsque le moteur d'entraînement 17 est en fonctionnement. Le manchon de refroidissement 51 sera, de préférence, réalisé dans le même matériau que les moyens de découplage 42, tel qu'un matériau élastomère.

La forme du manchon de refroidissement 51, et notamment l'épaisseur de paroi , est alors choisies de manière à ne pas perturber le comportement des moyens de découplage 32.

Selon l'exemple illustré, le manchon de refroidissement 51 possède une section de passage de forme sensiblement constante sur toute la longueur entre l'ouverture de refroidissement 50 et la fenêtre de refroidissement 51. Dans le cas présent, la section de passage du manchon de refroidissement 51 possède une forme sensiblement rectangulaire analogue à celle de l'ouverture de refroidissement 50 et de la fenêtre de refroidissement 51. Le manchon de refroidissement 51 définit donc un canal tubulaire canalisant le flux d'air de refroidissement.

Ainsi agencés, l'ouverture 50, le manchon 52 et la fenêtre 51 définissent un canal de circulation du flux d'air de refroidissement, s'étendant selon une direction droite sensiblement radiale par rapport à l'axe de rotation 16 du moteur d'entraînement 17. Bien entendu, une autre configuration pourrait être adoptée selon la conformation générale du groupe moto-ventilateur 1 et, notamment, du caisson de ventilation 4, en particulier du carter-support 3.

Afin de faciliter le montage, le manchon de refroidissement 51 est, de préférence mais non nécessairement, lié directement à une partie au moins des moyens de découplage 32, comme le montre la figure 3. Selon l'exemple de réalisation présenté, le manchon de refroidissement 52 est porté par la face supérieure de l'anneau 45 et fait partie intégrante de la même pièce moulée que les plots de découplage 42.

Selon l'exemple décrit précédemment, le manchon de refroidissement 52 est distinct des moyens de découplage 32. Toutefois, selon la présente invention, le manchon de refroidissement 52 peut également être intégré aux moyens de découplage 32.

La figure 4 est une vue en perspective d'une variante de réalisation du manchon de refroidissement 52 formant un élément de découplage du support-moteur 20 de la présente l'invention.

Ainsi, la figure 4 montre un exemple de réalisation selon lequel le manchon de refroidissement 52 forme un élément de découplage 32 pour la fixation du réceptacle 30 sur l'embase 21. Selon cette variante, le manchon de refroidissement 52 comprend un tube 60 intégrant à une extrémité une première platine de fixation 61 sur l'embase 21. Avantageusement, la première platine de fixation 61 est rectangulaire. Le tube 60 possède, à l'extrémité opposée, une deuxième platine de fixation 62 sur le réceptacle 30. Avantageusement, la deuxième platine de fixation 62 est rectangulaire.

Selon les exemples précédents, l'embase 21 et le réceptacle 30 comprennent, respectivement, une seule ouverture de refroidissement 50 et une seule fenêtre de refroidissement 51. Toutefois, l'embase 21 et le réceptacle 30 peuvent comprendre, respectivement, plusieurs ouvertures de refroidissement 50 et plusieurs fenêtres de refroidissement 51, étant entendu qu'il y a autant d'ouvertures de refroidissement 50 que de fenêtres de refroidissement 51. Le support-moteur 20 comprend alors autant de manchon de refroidissement 52 que de couples 'ouverture de refroidissement 50 / fenêtre de refroidissement 51'.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications ci-jointes.

## Revendications

1. Support-moteur (20) pour un moteur d'entraînement (17) d'une turbine (15) d'un groupe moto-ventilateur (1), comprenant :
- une embase (21) comprenant au moins une ouverture de refroidissement (50) pour la circulation d'un flux d'air de refroidissement du moteur d'entraînement (17), et
- un réceptacle (30) situé en partie au moins à l'intérieur de l'embase (21) et comprenant une paroi périphérique (35) formant un logement de réception (36) du moteur d'entraînement (17), la paroi périphérique (35) comprenant au moins une fenêtre de refroidissement (51) pour la circulation du flux d'air de refroidissement vers le logement de réception (36) du moteur, le support-moteur comportant des moyens de découplage (32) agencés entre l'embase (21) et le réceptacle (30) et assurant une liaison du réceptacle (30) sur l'embase (21),
le support-moteur (20) comprenant au moins un manchon de refroidissement (52) reliant l'ouverture de refroidissement (50) et la fenêtre de refroidissement (51), le manchon de refroidissement (52) formant un élément de découplage vibratoire entre le réceptacle (30) et l'embase (21),
le support-moteur étant **caractérisé en ce que**
la fenêtre de refroidissement (51) est située sensiblement en regard de l'ouverture de refroidissement (50), et **en ce que** l'embase (21) comprend une pluralité de moyens de fixation (23) sur un élément du groupe moto-ventilateur (1), ces moyens de fixation (23) étant localisés sur une paroi périphérique extérieure (26) de l'embase (21) et répartis sur la périphérie de l'embase (21).

2. Support-moteur (20) selon la revendication 1, dans lequel le manchon de refroidissement (52) possède une section de passage de forme sensiblement constante entre la fenêtre de refroidissement (51) et l'ouverture de refroidissement (50).

3. Support-moteur (20) selon la revendication 1 ou 2, dans lequel le manchon de refroidissement (52) est réalisé en matériau élastomère.

4. Support-moteur (20) selon la revendication 1, dans lequel le manchon de refroidissement (52) est réalisé dans le même matériau que les moyens de découplage (32).

5. Support-moteur (20) selon la revendication 1 ou 4, dans lequel le manchon de refroidissement (52) est lié directement au moins à une partie des moyens de découplage (32).

6. Support-moteur (20) selon l'une quelconque des revendications 1 à 5, dans lequel les moyens de découplage (32) et le manchon de refroidissement (52) appartiennent à une même pièce moulée.

7. Groupe moto ventilateur (1) comprenant un caisson de ventilation (4) comportant au moins une entrée d'air (5) et au moins une sortie d'air (6), une turbine (15) disposée dans le caisson de ventilation (4) pour aspirer un flux d'air par l'entrée d'air (5) et le refouler par la sortie d'air (6), un moteur d'entraînement (17) de la turbine (15) disposé dans le logement de réception (36) du moteur d'entraînement (17), et un support-moteur (20) selon l'une des revendications 1 à 6.

8. Groupe moto ventilateur (1) selon la revendication 7, dans lequel l'embase (21) comprend un épaulement périphérique (28) d'appui sur le caisson de ventilation (4).

9. Groupe moto ventilateur (1) selon la revendication 7 ou 8, dans lequel l'embase (21) est fixée sur le caisson de ventilation (4).

## Patentansprüche

1. Motorhalterung (20) für einen Antriebsmotor (17) einer Turbine (15) eines Lüftersatzes (1), umfassend:
- eine Basis (21), die mindestens eine Kühlöffnung (50) für die Zirkulation eines Kühlluftstroms des Antriebsmotors (17) umfasst, und
- einen Behälter (30), der mindestens teilweise im Inneren der Basis (21) angeordnet ist und eine periphere Wand (35) umfasst, die eine Aufnahmelagerung (36) des Antriebsmotors (17) bildet, wobei die periphere Wand (35) mindestens ein Kühlfenster (51) für die Zirkulation des Kühlluftstroms zur Aufnahmelagerung (36) des Motors umfasst,
wobei die Motorhalterung Entkopplungsmittel (32) umfasst, die zwischen der Basis (21) und dem Behälter (30) eingerichtet sind und eine Verbindung des Behälters (30) mit der Basis (21) sicherstellen,
wobei die Motorhalterung (20) mindestens eine Kühlmanschette (52) umfasst, welche die Kühlöffnung (50) und das Kühlfenster (51) verbindet,
wobei die Kühlmanschette (52) ein Vibrationsentkupplungselement zwischen dem Behälter (30) und der Basis (21) bildet,
wobei die Motorhalterung **dadurch gekennzeichnet ist, dass** das Kühlfenster (51) im Wesentlichen gegenüber der Kühlöffnung (50) angeordnet ist, und dadurch, dass die Basis (21) eine Vielzahl von Befestigungsmitteln (23) an einem Element des Lüftersatzes (1) umfasst, wobei diese Befestigungsmittel (23) auf einer äußeren peripheren Wand (26) der Basis (21) angeordnet sind und auf der Peripherie der Basis (21) verteilt sind.

2. Motorhalterung (20) nach Anspruch 1,
wobei die Kühlmanschette (52) einen Durchgangsabschnitt mit im Wesentlichen konstanter Form zwischen dem Kühlfenster (51) und der Kühlöffnung (50) besitzt.

3. Motorhalterung (20) nach Anspruch 1 oder 2,
wobei die Kühlmanschette (52) aus einem elastomeren Material hergestellt ist.

4. Motorhalterung (20) nach Anspruch 1,
wobei die Kühlmanschette (52) aus demselben Material wie die Entkopplungsmittel (32) hergestellt ist.

5. Motorhalterung (20) nach Anspruch 1 oder 4,
wobei die Kühlmanschette (52) direkt mit mindestens einem Teil der Entkopplungsmittel (32) verbunden ist.

6. Motorhalterung (20) nach einem der Ansprüche 1 bis 5,
wobei die Entkopplungsmittel (32) und die Kühlmanschette (52) zu demselben Formstück gehören.

7. Lüftersatz (1), umfassend ein Lüftergehäuse (4), umfassend mindestens einen Lufteinlass (5) und mindestens einen Luftauslass (6), eine Turbine (15), die in dem Lüftergehäuse (4) angeordnet ist, um einen Luftstrom durch den Lufteinlass (5) anzusaugen und diesen durch den Luftauslass (6) auszustoßen, einen Antriebsmotor (17) der Turbine (15), der in der Aufnahmelagerung (36) des Antriebsmotors (17) angeordnet ist, und eine Motorhalterung (20) nach einem der Ansprüche 1 bis 6.

8. Lüftersatz (1) nach Anspruch 7,
wobei die Basis (21) eine periphere Schulter (28) zur Anlage am Lüftergehäuse (4) umfasst.

9. Lüftersatz (1) nach Anspruch 7 oder 8,
wobei die Basis (21) am Lüftergehäuse (4) befestigt ist.

## Claims

1. Motor mount (20) for a drive motor (17) of an impeller (15) of a motor-fan unit (1), comprising:
- a seat (21) comprising at least one cooling opening (50) for the circulation of a cooling air flow for the drive motor (17), and
- a receptacle (30) situated at least partly inside the seat (21) and comprising a peripheral wall (35) forming an accommodation housing (36) for the drive motor (17), the peripheral wall (35) comprising at least one cooling aperture (51) for the circulation of the cooling air flow to the motor accommodation housing (36),
the motor mount (20) comprising decoupling means (32) arranged between the seat (21) and the receptacle (30) and ensuring a connection of the receptacle (30) to the seat (21),
the motor mount (20) comprising at least one cooling sleeve (52) connecting the cooling opening (50) and the cooling aperture (51),
the cooling sleeve (52) forming a vibrational decoupling element between the receptacle (30) and the seat (21),
the motor mount being **characterized in that** the cooling aperture (51) is situated substantially opposite the cooling opening (50), and **in that** the seat (21) comprises a plurality of fixing means (23) on an element of the motor-fan unit (1), the fixing means (23) being located on an exterior peripheral wall (26) of the seat (21) and distributed over the periphery of the seat (21) .

2. Motor mount (20) according to Claim 1, in which the cooling sleeve (52) has a passage section of substantially constant shape between the cooling aperture (51) and the cooling opening (50).

3. Motor mount (20) according to Claim 1 or 2, in which the cooling sleeve (52) is made of elastomer material.

4. Motor mount (20) according to Claim 1, in which the cooling sleeve (52) is made of the same material as the decoupling means (32).

5. Motor mount (20) according to Claim 1 or 4, in which the cooling sleeve (52) is directly connected to at least some of the decoupling means (32) .

6. Motor mount (20) according to any of Claims 1 to 5, in which the decoupling means (32) and the cooling sleeve (52) belong to the same molding.

7. Motor-fan unit (1) with a ventilation compartment (4) comprising at least one air inlet (5) and at least one air outlet (6), an impeller (15) arranged in the ventilation compartment (4) to draw in an air flow through the air inlet (5) and expel it through the air outlet (6), a drive motor (17) for the impeller (15) arranged in the accommodation housing (36) of the drive motor (17), and a motor mount (20) according to any of Claims 1 to 6.

8. Motor-fan unit (1) according to Claim 7, in which the seat (21) comprises a peripheral shoulder (28) resting on the ventilation compartment (4).

9. Motor-fan unit (1) according to Claim 7 or 8, in which the seat (21) is fixed to the ventilation compartment (4).
